# EUROPEAN PATENT APPLICATION

(11) **EP 4 656 569 A1**
(43) Date of publication of application: **03.12.2025**
(21) Application number: 24747157.6
(22) Date of filing: 15.01.2024
(51) Int. Cl.: B65H 41/00, C09J 7/38

(54) **PROTECTIVE SEAL DETACHMENT METHOD AND PROTECTIVE SEAL DETACHMENT DEVICE**

(30) Priority: 23.01.2023 JP 2023008382
(71) Applicant: Creative Technology Corporation, Kawasaki-shi, Kanagawa 213-0034 (JP)
(72) Inventor: ONODERA, Hiromitsu, Kawasaki-shi, Kanagawa 213-0034 (JP)
(74) Representative: Kraus & Lederer PartGmbB
(86) International application number: PCT/JP2024/000845
(87) International publication number: WO 2024/157826

(57) **Abstract**

A protective seal detachment method capable of easily detaching a protective seal having strong adhesive force by using a simpler device, and a detachment device used in the method are provided. The protective seal detachment method is a method for detaching a protective seal from a protected workpiece in which a surface of a workpiece main body is protected with the protective seal, and includes: a first process in which an adhesive tape piece having an adhesive surface is pressed by a rotating roller to hold the adhesive tape piece on a roll surface of the rotating roller with the adhesive surface facing outward; and a second process in which the rotating roller holding the adhesive tape piece is pressed against one end of the protective seal on the protected workpiece to adhere to the adhesive surface of the adhesive tape piece and is rotated in an opposite direction toward the other end of the protective seal to peel the protective seal from the surface of the workpiece main body, and the detachment device includes a rotatable rotating roller having a roll surface with adhesiveness and a rotation regulating unit configured to regulate rotation of the rotating roller.

## Description

### Technical Field

The present invention relates to a protective seal detachment method for detaching a protective seal from a protected workpiece in which a surface of a workpiece main body is protected with the protective seal, and a protective seal detachment device used in the method.

### Background Art

For example, a glass film that adheres to a liquid crystal display of a smartphone to prevent scratches on the display, and a semiconductor wafer used in a semiconductor manufacturing process are handled in a state in which a surface of the glass film or the semiconductor wafer, which constitutes its main body, is protected with a protective seal. Protective seals for protecting surfaces of electronic devices, electronic components, various substrates, and plate materials, including those described above, are widely used in general.

When a member to which a protective seal is attached is to be used, it is naturally necessary to detach the protective seal. Thus, in processes of manufacturing semiconductors and industrial products, methods for detaching protective seals have been actively studied. In general, since a protective seal closely adheres to a member body to be protected with the same size and shape, various considerations including device configurations are needed to mechanically detach the protective seal.

For example, a method has been disclosed in which a hollow pipe with an opening that communicates an internal space and the outside is used as a vacuum adsorption roller to adsorb a protective seal while the internal space is exhausted, and a seal body to which the protective seal adheres is moved to wind the protective seal around the hollow pipe, thereby detaching the protective seal (refer to Patent Literature 1).

In addition, a method has been disclosed in which an adhesive tape is attached to one side end of a protective film on a surface of a substrate such that the adhesive tape protrudes toward the outside of the substrate, a protrusion part of the adhesive tape is sensed by a sensor, and the adhesive tape is pulled while the protrusion part is held by suction with a suction drum, thereby detaching the protective film from the substrate surface (refer to Patent Literature 2).

In addition, a method has been disclosed in which the distal end of an adhesive tape pulled out from an adhesive tape roll is attached to an end edge of a cover film closely adhering to a surface of a plate material, an attached part is pressed by another mechanism, and then, rotation of the adhesive tape roll is restricted to retract the adhesive tape roll to detach the cover film from the surface of the plate material (refer to Patent Literature 3).

In addition, a method has been disclosed when a cover sheet adhering to a surface of a plate material is to be detached from the surface of the plate material together with an adhesive tape, an adhesive tape having an adhesive surface on at least one side is attached in a direction intersecting a conveying direction of the plate material in a state in which the adhesive tape protrudes from the distal end of the plate material, a protruding part of the adhesive tape is pressed to adhere, and then a winding means is swung in a direction in which the cover sheet is detached from the surface of the plate material so that the cover sheet is detached and wound (refer to Patent Literature 4).

In addition, a detachment device has been disclosed that includes a supply unit configured to supply a roll of adhesive tape, a reciprocating movement means configured to feed out the adhesive tape from the supply unit, and a winding unit configured to wind the fed adhesive tape, and in which the winding unit includes a winding reel configured to wind the adhesive tape as well as a torque motor having a brake function to regulate rotation of a supply reel, and while a braking means is actuated to regulate rotation of an adhesive tape supply reel, the torque motor is rotationally driven until a set torque is reached so that the slack of the adhesive tape fed out from the supply reel is substantially accurately wound in accordance with the fed length of the adhesive tape, thereby detaching a protective seal while reducing waste of the adhesive tape (refer to Patent Literature 5).

In addition, a method has been disclosed in which when a protective seal for protecting a surface of a polarization plate constituting a liquid crystal display panel is to be detached, a label is attached to a corner portion of the protective seal, and while the label is clamped and pulled, an antistatic material is supplied between the protective seal and the polarization plate to facilitate detachment of the protective seal (refer to Patent Literature 6).

### Citation List

### Patent Literature

Patent Literature 1: JP 2004-338871 A
Patent Literature 2: JP 52-16538 A
Patent Literature 3: JP 3-61261 A
Patent Literature 4: JP 10-167560 A
Patent Literature 5: JP 2020-33171 A
Patent Literature 6: JP 2007-25651 A

### Summary of Invention

### Technical Problem

Conventional detachment of a protective seal from a protected workpiece in which a surface of a workpiece main body is protected with the protective seal can be roughly classified into, for example, a method (direct method) in which the protective seal is directly held and detached with a hollow pipe as disclosed in Patent Literature 1, and a method (indirect method) in which a label, an adhesive tape, or the like is attached to the protective seal and, for example, clamped to detach the protective seal as disclosed in Patent Literatures 2 to 6.

The former direct method requires a relatively simple device configuration but has difficulty in detaching a protective seal having strong adhesive force to the workpiece main body in some cases. The latter indirect method can detach a protective seal having relatively strong adhesive force but requires a complicated device configuration, which inevitably makes detachment operation cumbersome.

Thus, the inventors earnestly studied means for easily detaching a protective seal having strong adhesive force by using a simpler device, and as a result, found that even a protective seal having strong adhesive force can be reliably detached from a surface of a workpiece main body by pressing and rotating the adhesive tape piece with an adhesive surface by a rotating roller to hold the adhesive tape piece on a roll surface of the rotating roller with the adhesive surface facing outward and by rotating the rotating roller toward the other end of the protective seal with the adhesive surface of the adhesive tape piece adhering to the protective seal, thereby completing the present invention.

Accordingly, it is an object of the present invention to provide a protective seal detachment method capable of easily detaching a protective seal having strong adhesive force by using a simpler device.

It is another object of the present invention to provide a protective seal detachment device capable of more easily and reliably detaching a protective seal having strong adhesive force.

### Solution to Problem

Specifically, the present invention is a protective seal detachment method for detaching a protective seal from a protected workpiece in which a surface of a workpiece main body is protected with the protective seal, the method including:
a first process in which an adhesive tape piece having an adhesive surface is pressed by a rotating roller and the rotating roller is rotated to hold the adhesive tape piece on a roll surface of the rotating roller with the adhesive surface facing outward; and
a second process in which the rotating roller holding the adhesive tape piece is pressed against one end of the protective seal on the protected workpiece to adhere to the adhesive surface of the adhesive tape piece and is rotated to cause the adhesive tape piece to adhere to the protective seal, and then, the rotating roller is rotated in an opposite direction toward the other end of the protective seal to peel the protective seal from the surface of the workpiece main body.

Moreover, the present invention is a protective seal detachment device used to detach a protective seal from a protected workpiece in which a surface of a workpiece main body is protected with the protective seal, the protective seal detachment device including:
a rotatable rotating roller having a roll surface with adhesiveness; and
a rotation regulating unit configured to regulate rotation of the rotating roller, in which
an adhesive tape piece having an adhesive surface is pressed by the rotating roller and rotated to hold the adhesive tape piece on the roll surface of the rotating roller with the adhesive surface facing outward, and then, rotation of the rotating roller is regulated by the rotation regulating unit, and
subsequently, the rotating roller holding the adhesive tape piece is pressed against one end of the protective seal on the protected workpiece to adhere to the adhesive surface of the adhesive tape piece, the regulation of the rotating roller by the rotation regulating unit is canceled, the rotating roller is rotated to cause the adhesive tape piece to adhere to the protective seal, and then, the rotating roller is rotated in an opposite direction toward the other end of the protective seal to peel the protective seal from the surface of the workpiece main body.

First, in the first process of the protective seal detachment method in the present invention, while the rotating roller is made contact with an adhesive tape piece having an adhesive surface and the adhesive tape piece is pressed by the rotating roller, the rotating roller is rotated to hold the adhesive tape piece on the roll surface of the rotating roller with the adhesive surface facing outward. The adhesive tape piece used herein may be any tape having an adhesive surface on at least one side, and preferably has an adhesive surface formed by applying an adhesive, a bonding agent, or the like to one side of a tape base material made of paper, resin, or the like. In the first process, preferably, the tape base material side of the adhesive tape piece is pressed by the rotating roller and the rotating roller is rotated to hold the adhesive tape piece on the roll surface of the rotating roller with the adhesive surface of the tape base material facing outward.

For the adhesive tape piece to be pressed by the rotating roller and held on the roll surface, adhesiveness may be provided on the rotating roller side or on the adhesive tape piece side. Specifically, in the former case, adhesiveness is provided on the rotating roller side, and a rotating roller having a roll surface with adhesiveness partially or entirely is used. In the latter case, adhesiveness may also be provided on the opposite surface side of a tape base material having an adhesive surface. The former case is preferable, and a rotating roller having a roll surface with adhesiveness is preferably used.

More specifically, part or all of the roll surface of the rotating roller is formed of an adhesive holding material with self-adhesiveness. Preferable examples of such an adhesive holding material with self-adhesiveness include resin materials such as silicon rubber, ethylenepropylene-diene rubber (EPDM), butyl rubber, fluororesin, urethane resin, and acrylic resin. The adhesive holding material is preferably a self-adhesive material that exhibits van der Waals force, which is a type of intermolecular force, at an interface with a protected workpiece to be adhesively held.

Subsequently, in the second process, the rotating roller is pressed against one end of the protective seal on the protected workpiece to adhere to the adhesive surface of the adhesive tape piece and is rotated to cause the adhesive tape piece to adhere to a surface of the protective seal. Then, the rotating roller is rotated in the opposite direction toward the other end of the protective seal to peel (detach) the protective seal from the surface of the workpiece main body, and accordingly, the adhesive tape piece closely adheres to and is held on the rotating roller.

In this manner, by rotating the rotating roller, with the adhesive tape piece held on its roll surface, toward the other end of the protective seal while rolling the rotating roller over the surface of the protected workpiece, the protective seal can be peeled from the protected workpiece, starting from the adhesive tape piece. Moreover, peeling force of the rotating roller as well as force in the circumferential direction (tangent line direction) act on the adhesive tape piece and the protective seal, and accordingly, the adhesive tape piece and the protective seal closely adhere to (wind around) the rotating roller so that even a protective seal having strong adhesive force to the workpiece main body can be reliably detached from the protected workpiece while the adhesive tape piece is not detached from the rotating roller at start of detachment. Furthermore, the adhesive tape piece, which adheres to one end of the protective seal, is held on the roll surface of the rotating roller by pressing and rotating the rotating roller in the first process, and thus with a simple device configuration, it is possible to hold the adhesive tape piece and detach the protective seal.

Moreover, in the present invention, the protective seal detached in the second process may be collected from the rotating roller through a third process as described below. Specifically, in the third process, a clamp member to be pressed against the roll surface of the rotating roller is provided near the rotating roller, and a protective seal collection table for collecting the protective seal detached in the second process is prepared. Then, in a state in which the protective seal detached in the second process is held on the roll surface of the rotating roller by the clamp member, the rotating roller is pressed against the protective seal collection table to attach the back surface of the protective seal, and the held state by the clamp member is canceled depending on cases, and then, the rotating roller is rotated in a direction opposite to that in the second process, thereby detaching the protective seal from the roll surface of the rotating roller together with the adhesive tape piece and collecting the protective seal onto the protective seal collection table. In this manner, since the protective seal detached in the second process is clamped by the clamp member when detachment is completed, the wound state of the protective seal being wound over the rotating roller can be held even when adhesiveness is weak on the back surface of the protective seal.

Thus, the process can return to the first process again and repeat detachment of a protective seal from a protected workpiece. Moreover, such collection of a protective seal may be repeated such that after collection of the first protective seal onto the protective seal collection table, the next protective seal is collected on collected protective seals. Note that, in a case where adhesiveness is insufficient on the back surface of a protective seal, which is surface closely adhering to the workpiece main body, for the protective seal to be collected from the rotating roller as described above, adhesiveness may be additionally provided on the protective seal collection table or the surface of a collected protective seal.

A detachment device for performing protective seal detachment in the present invention is not particularly limited, but as an example, preferably includes a rotatable rotating roller having a roll surface with adhesiveness, and a rotation regulating unit configured to regulate rotation of the rotating roller.

In the detachment device, first, an adhesive tape piece having an adhesive surface is pressed by the rotating roller, and the rotating roller is rotated to hold the adhesive tape piece on the roll surface of the rotating roller with the adhesive surface facing outward, and then, rotation of the rotating roller is regulated by the rotation regulating unit. This corresponds to the first process of the protective seal detachment method described above.

Subsequently, the above-described rotating roller is pressed against one end of the protective seal to adhere to the adhesive surface of the adhesive tape piece, the regulation of the rotating roller by the rotation regulating unit is canceled, and then, the rotating roller is rotated to cause the adhesive tape piece to adhere to the surface of the protective seal. Then, while the rotating roller is rotated in the opposite direction toward the other end of the protective seal, the protective seal is peeled from the surface of the workpiece main body. This corresponds to the second process.

The above-described detachment device may further include a clamp member to be pressed against the roll surface of the rotating roller, corresponding to the above-described third process. The clamp member is preferably a guide roller having a roll diameter smaller than that of the rotating roller and disposed near the rotating roller with their roll surfaces facing each other.

The above-described detachment device may further include a rotational position sensor for detecting the rotational position of the rotating roller. For example, in a case where the adhesive tape piece is held with adhesiveness provided to part of the roll surface of the rotating roller, the rotational position sensor can be used to detect an adhesive region of the roll surface.

The detachment device in the present invention preferably further includes an upward-downward movement means capable of moving at least the rotating roller in upward and downward directions, and a forward-backward movement means capable of moving at least the rotating roller in frontward and backward directions. With the upward-downward movement means, the rotating roller can be pressed against the adhesive tape piece and the protective seal on the protected workpiece. With the forward-backward movement means, the rotatable rotating roller can be rolled over the adhesive tape piece and the protective seal when rotated.

An existing industrial robot such as an articulated robot or an orthogonal robot may be used as the upward-downward movement means and the forward-backward movement means. For example, a detachment unit including the rotating roller, the rotation regulating unit, and the like may be combined with an orthogonal robot, which has a movement axis (x-y axis) not only in forward and backward directions but also in left and right directions and has a movement axis (z axis) in upward and downward directions, to constitute a protective seal detachment device.

Examples of a protected workpiece from which a protective seal is to be detached in the present invention include a smartphone film that is attached to a liquid crystal display of a smartphone to prevent scratches on the display, reflection, and the like and in which a sheet made of glass, polyethylene terephthalate (PET), or the like, which corresponds to the workpiece main body, is protected with a protective seal. Other examples include semiconductor wafers, polarization plates of liquid crystal panels, substrates used in electronic devices and electronic components as well as semiconductor manufacturing processes and liquid crystal panel assembly, such as metallic materials including aluminum and copper, resin components such as acrylic and polycarbonate, and glass base materials, and also include protected workpieces in which the surface of a workpiece main body made of various plate materials is protected with a protective seal, but the present invention is not particularly limited thereto. In addition, according to the present invention, it is possible to detach a protected workpiece in which a workpiece main body has a curved surface and is protected with a protective seal, such as a glass lens.

### Advantageous Effects of Invention

According to the present invention, even a protective seal having strong adhesive force can be easily detached by using a simpler device. Moreover, with a simpler configuration, the device can be easily combined with existing robots and the like and used to detach a protective seal on various protected workpieces, and thus has excellent versatility.

### Brief Description of Drawings

[Figure 1] Figure 1 is a perspective explanatory diagram of a protective seal detachment device according to the present invention.
[Figure 2] Figure 2 is a side explanatory diagram of the protective seal detachment device according to the present invention.
[Figure 3] Figure 3 is a diagram for description of an adhesive tape piece used in a protective seal detachment method according to the present invention.
[Figure 4] Figures 4(1) to 4(3) are diagrams for description of a state in which the adhesive tape piece is held on a roll surface of a rotating roller when a protective seal is to be detached from a protected workpiece.
[Figure 5] Figure 5 is a diagram for description of the protected workpiece from which the protective seal is to be detached.
[Figure 6] Figures 6(a1) to 6(a3) are diagrams for description of a state in which the adhesive tape piece held on the rotating roller is attached to the protective seal on a surface of the protected workpiece.
[Figure 7] Figures 7(b1) to 7(b3) are diagrams for description of a state in which the protective seal is detached from a surface of a workpiece main body, following the state in Figure 6.
[Figure 8] Figures 8(1) to 8(3) are diagrams for description of a state in which the protective seal detached by using the rotating roller is attached to a protective seal collection table and collected.
[Figure 9] Figure 9 is a diagram for description of a state in which the protective seal is detached from a long protected workpiece and wound by the rotating roller.
[Figure 10] Figures 10(a) to 10(c) are diagrams illustrating an example of a state in which a non-adhesive region is formed on an adhesive surface side of the adhesive tape piece.
[Figure 11] Figure 11 is a diagram for description of a state in which an adhesive region is formed on part of the roll surface of the rotating roller.
[Figure 12] Figures 12(b1) to 12(b3) are diagrams for description of a state in which the protective seal is detached from a surface of a workpiece main body having a curved surface.

### Description of Embodiments

The present invention will be described below in more detail with reference to the drawings.

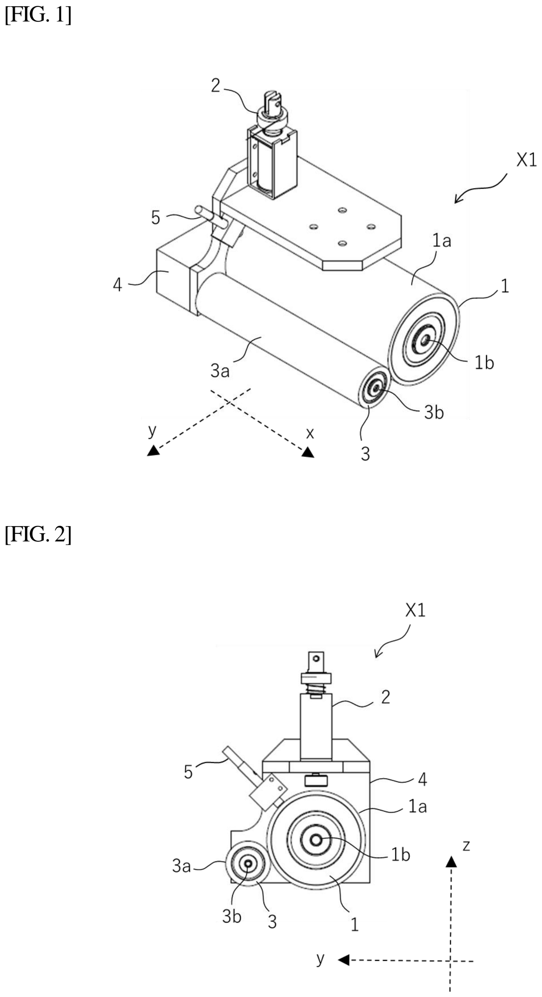

Figures 1 and 2 illustrate a detachment device X1 for detaching a protective seal from a protected workpiece (not illustrated) in which a surface of a workpiece main body is protected with the protective seal.

The detachment device X1 includes a rotating roller 1 having a roll surface 1a with adhesiveness, a push-solenoid rotation regulating unit 2 capable of pressing a distal-end stopper against the roll surface 1a of the rotating roller 1 to regulate rotation of the rotating roller 1, a guide roller 3 having a roll diameter smaller than that of the rotating roller 1 and having a roll surface 3a facing the roll surface 1a of the rotating roller 1, a guide roller pressing mechanism 4 configured to press the roll surface 3a of the guide roller 3 against the roll surface 1a of the rotating roller 1 by a biasing force of a spring (not illustrated), and a rotational position sensor 5 capable of detecting the rotational position of the roll surface 1a of the rotating roller 1, which together constitute a detachment unit.

Among these components, the rotating roller 1 and the guide roller 3 are each formed of a cylindrical aluminum member and are rotatable by rotation shafts 1b and 3b,respectively, with bearings. In addition, an adhesive holding material is attached over the entire surface of the roll surface 1a of the rotating roller 1 by an acrylic adhesive. The adhesive holding material exhibits adhesiveness based on van der Waals force, thereby allowing repeated adhesion and separation of an adhesive tape piece to be described later.

Then, the above-described detachment unit is assembled to a non-illustrated orthogonal robot having an x-y axis capable of moving in forward, backward, left, and right directions and a z axis capable of moving in upward and downward directions, thereby constituting the detachment device X1 according to the present invention.

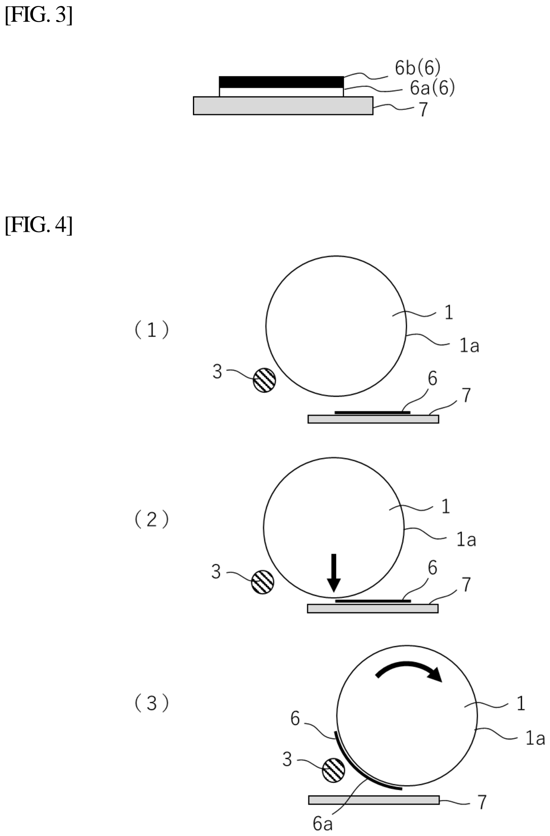

To detach a protective seal from a protected workpiece by using the detachment device X1, first, the protective seal is held on the roll surface of the rotating roller by using an adhesive tape piece 6 as illustrated in Figure 3. Specifically, the adhesive tape piece 6 has an adhesive surface 6a to which an adhesive is applied on one side of a tape base material 6b, and the adhesive surface 6a is disposed on a release sheet 7 having releasability.

As indicated in Figure 4(1), in a state in which a rotational direction reference position (origin position) of the rotating roller 1 is detected by the rotational position sensor, the detachment unit is moved by the non-illustrated orthogonal robot as in Figure 4(2), while rotation of the rotating roller 1 is regulated by the rotation regulating unit, so that the roll surface 1a of the rotating roller 1 is made contact with an end edge of the adhesive tape piece 6 and pressed. Subsequently, as in Figure 4(3), the regulation by the rotation regulating unit is canceled, the rotating roller 1 is moved backward by the above-described robot, and the roll surface 1a is rotated toward the other end of the adhesive tape piece 6 so that the adhesive surface 6a of the adhesive tape piece 6 is detached from the release sheet 7 and the adhesive tape piece 6 is transferred onto the rotating roller 1 side. Accordingly, the adhesive tape piece 6 can be held on the roll surface 1a of the rotating roller 1 with the adhesive surface 6a facing outward (first process). Thereafter, rotation of the rotating roller 1 is regulated by the rotation regulating unit for preparation of the next process. Moreover, in the first process, in order to efficiently use the adhesiveness of the roll surface 1a of the rotating roller 1, the rotating roller 1 is rotated by a predetermined amount, after the rotational direction reference position (origin position) of the rotating roller 1 is detected by the rotational position sensor 5, to change the rotational position of the adhesive tape piece 6 held on the roll surface 1a of the rotating roller 1, thereby preventing adhesion of the adhesive tape piece 6 only to a specific place of the rotating roller 1 and preventing decrease of the adhesiveness of the rotating roller 1.

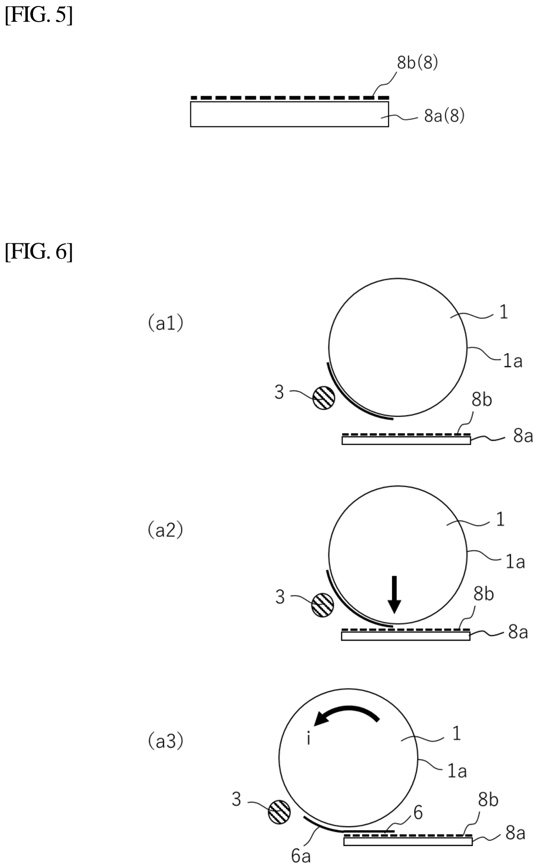

Subsequently, when a protective seal 8b is to be detached from a protected workpiece 8 in which a surface of a workpiece main body 8a is protected with the protective seal 8b as in Figure 5, first, as illustrated in Figure 6(a1), the rotating roller 1, rotation of which is regulated by the rotation regulating unit, is moved until the adhesive tape piece 6 held on the roll surface 1a by the above-described robot is set to a position to start attachment of the protective seal 8b. Subsequently, as in Figure 6(a2), the rotating roller 1 is pressed against one end of the protective seal 8b of the protected workpiece 8 to adhere the adhesive surface 6a of the adhesive tape piece 6. Thereafter, as in Figure 6(a3), the regulation by the rotation regulating unit is canceled, and the rotating roller 1 is moved forward in the y direction by the above-described robot and rotated (arrow i in the drawing) to adhere the adhesive tape piece 6 to a position to start detachment of the protective seal 8b.

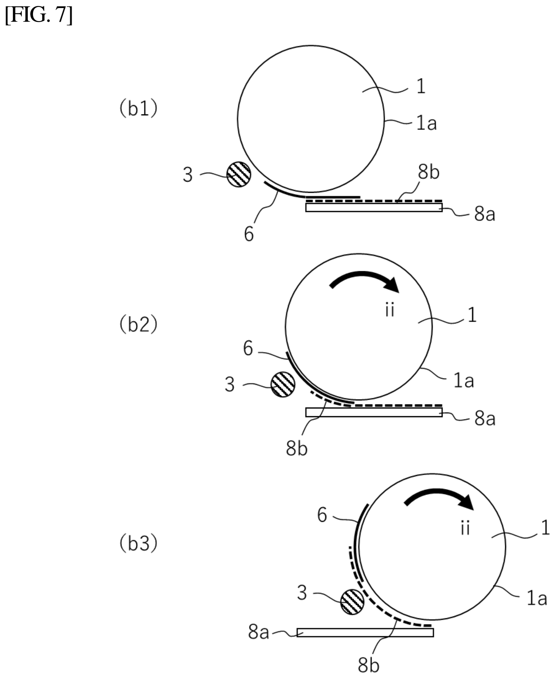

After the adhesive tape piece 6 adheres to the protective seal 8b in this manner, the rotating roller 1 is moved backward in the y direction from the state illustrated in Figure 7(b1) while the regulation by the rotation regulating unit is canceled, and the rotating roller 1 is rotated toward the other end of the protective seal 8b in a direction opposite to that in the above-described case of Figure 6(a3) (arrow ii in the drawing). Accordingly, as in Figure 7 (b3), while the protective seal 8b is peeled from the surface of the workpiece main body 8a, the protective seal 8b is wound onto the roll surface 1a of the rotating roller 1 together with the adhesive tape piece 6, thereby detaching the protective seal 8b from the protected workpiece 8 (second process). Thereafter, rotation of the rotating roller 1 is regulated by the rotation regulating unit for preparation of the next process.

The protective seal 8b detached as described above may be collected by using a protective seal collection table prepared for collecting the protective seal.

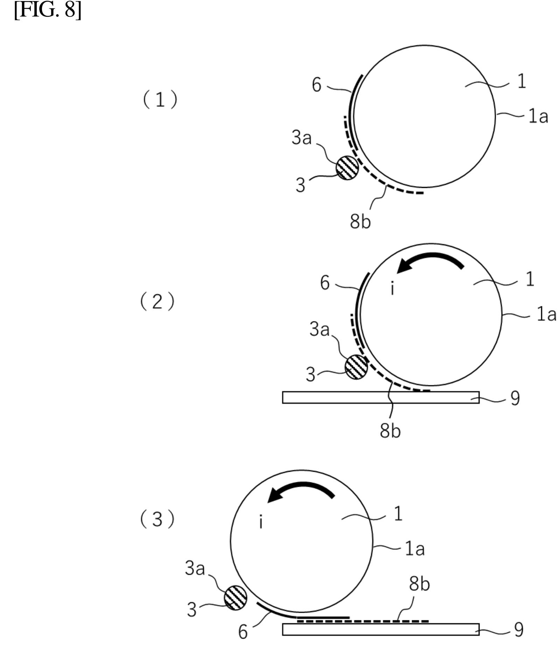

First, as indicated in Figure 8(1), in a state in which rotation of the rotating roller 1 is regulated by the rotation regulating unit, the protective seal 8b detached as described above is held between the guide roller 3 and the roll surface 1a of the rotating roller 1. In this process, the roll surface 3a of the guide roller 3 may be pressed against the roll surface 1a of the rotating roller 1 by the guide roller pressing mechanism 4, for example, in a case where the protective seal 8b is a material having high stiffness.

Subsequently, as indicated in Figure 8(2), the rotating roller 1 is pressed against a prepared protective seal collection table 9 to attach the back surface of the protective seal 8b. Then, as in Figure 8(3), the regulation by the rotation regulating unit is canceled and the rotating roller 1 is moved toward the front side in the y direction, which is a direction opposite to that in a case where the protective seal 8b is detached, and rotated (arrow i in the drawing) to attach the protective seal 8b to the protective seal collection table 9 (third process). In this process, if the adhesiveness of the protective seal 8b detached from the protected workpiece 8 is insufficient for the attachment, for example, an adhesive may be applied to the surface of the protective seal collection table 9 to provide adhesiveness, or an adhesive sheet may be provided.

In this manner, the protective seal 8b can be detached and collected from the roll surface 1a of the rotating roller 1 together with the adhesive tape piece 6. Thus, the process can return to the first process described above and repeat detachment of the protective seal 8b from another protected workpiece 8. The protective seal 8b detached again may adhere on the previously collected protective seal by using the above-described protective seal collection table 9 again or may be collected onto another prepared protective seal collection table.

The above-described adhesive tape piece 6 and protected workpiece 8 as well as the protective seal collection table 9 may be fixed by using, for example, a non-illustrated vacuum adsorption device or electrostatic suction device.

Torque may be applied to the rotatable rotating roller 1 by using a friction-type slipping clutch or the like. Specifically, when the rotating roller 1 is rotated to hold the adhesive tape piece on the roll surface or when the protective seal 8b is to be detached, constant force (tension) is provided in the rotational direction to absorb variation (unevenness) in adhesive force of the adhesive tape piece 6 on the release sheet 7, variation (unevenness) in adhesive force of the protective seal 8b on the protected workpiece 8, variation (unevenness) in the adhesiveness of the roller surface 1a of the rotating roller 1, and variation (unevenness) in the moving speed of the rotating roller 1, thereby more reliably performing holding of the adhesive tape piece and detachment of the protective seal 8b.

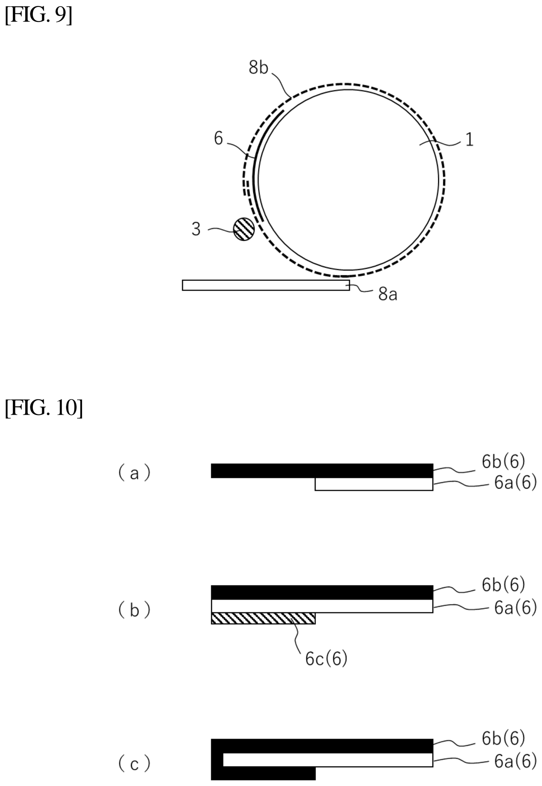

In a case where, as illustrated in Figure 9, the protected workpiece 8 protected by the protective seal 8b is long and the protective seal 8b wound onto the rotating roller 1 overlaps the remaining part of the adhesive surface 6a of the adhesive tape piece 6, the overlapping part may be processed to be a non-adhesive region. For example, the adhesive applied to one side of the tape base material 6b may be restricted to partially provide the adhesive surface 6a as illustrated in Figure 10(a), a seal material 6c may be attached to part of the adhesive surface 6a as in Figure 10(b), or the tape base material 6b may be folded to form a non-adhesive region on the adhesive surface 6a as in Figure 10(c).

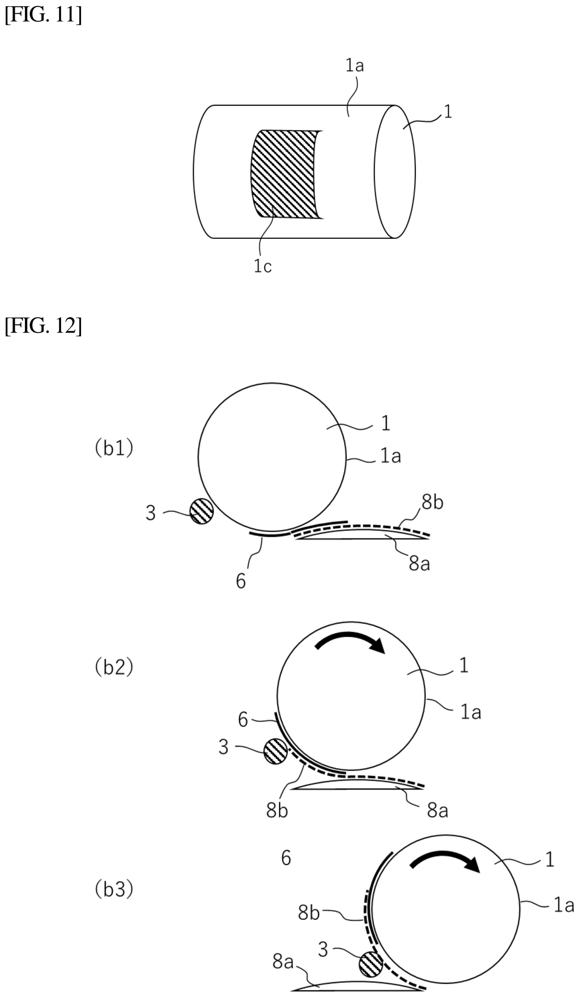

When adhesiveness is provided to the rotating roller 1, the above-described adhesive holding material may be attached to the entire surface of the roll surface 1a so that adhesiveness can be exhibited on the entire roll surface 1a, or the adhesive holding material may be attached to part of the roll surface 1a to partially provide an adhesive region 1c as in Figure 11. Since adhesiveness is partially exhibited, the protective seal 8b detached and wound can be prevented from adhering to the roll surface 1a of the rotating roller 1, which facilitates collection of the protective seal 8b in the above-described third process. Note that, when adhesiveness is to be exhibited on part of the roll surface 1a of the rotating roller 1, the rotational direction reference position (origin position) of the rotating roller 1 may be detected by the rotational position sensor 5, the rotational distance from the rotational direction reference position to the adhesive region 1c, which is known in advance, may be calculated, and rotational movement may be performed to cause the adhesive tape piece 6 to adhere on the adhesive region 1c.

The detachment device X1 is not limited to a protected workpiece in which the workpiece main body has a flat surface but may also be applied to a protected workpiece having a curved surface. Specifically, as illustrated in Figures 12(b1) to 12(b3), the protective seal 8b protecting the surface of the workpiece main body 8a having a curved surface can be detached in the same manner as in the above-described case of Figures 7(b1) to 7(b3).

As described above, according to the present invention, even a protective seal having strong adhesive force can be easily detached from the workpiece main body by a simpler device configuration. In particular, in the present invention, with a relatively simple device configuration, the device can be combined with existing robots and the like and used to detach a protective seal from various protected workpieces, and thus has excellent versatility.

### Reference Signs List

1 rotating roller
1a roll surface
2 rotation regulating unit
3 guide roller
3a roll surface
4 guide roller pressing mechanism
5 rotational position sensor
6 adhesive tape piece
6a adhesive surface
6b tape base material
7 release sheet
8 protected workpiece
8a workpiece main body
8b protective seal
9 protective seal collection table

## Claims

1. A protective seal detachment method for detaching a protective seal from a protected workpiece in which a surface of a workpiece main body is protected with the protective seal, the method comprising:
a first process in which an adhesive tape piece having an adhesive surface is pressed by a rotating roller and the rotating roller is rotated to hold the adhesive tape piece on a roll surface of the rotating roller with the adhesive surface facing outward; and
a second process in which the rotating roller holding the adhesive tape piece is pressed against one end of the protective seal on the protected workpiece to adhere to the adhesive surface of the adhesive tape piece and is rotated to cause the adhesive tape piece to adhere to the protective seal, and then, the rotating roller is rotated in an opposite direction toward the other end of the protective seal to peel the protective seal from the surface of the workpiece main body.

2. The protective seal detachment method according to claim 1, wherein a clamp member to be pressed against the roll surface of the rotating roller is provided near the rotating roller, a protective seal collection table for collecting the protective seal detached in the second process is prepared, and the method further includes a third process in which while the protective seal detached in the second process is held on the roll surface of the rotating roller by the clamp member, the rotating roller is pressed against the protective seal collection table to attach a back surface of the protective seal and is rotated in a direction opposite to the direction in the second process to collect the detached protective seal onto the protective seal collection table.

3. The protective seal detachment method according to claim 1, wherein the adhesive tape piece has an adhesive surface on one side of a tape base material, the rotating roller has a roll surface with adhesiveness, and in the first process, the roll surface of the rotating roller is pressed against the tape base material of the adhesive tape piece and rotated to hold the adhesive tape piece.

4. A protective seal detachment device that is used to detach a protective seal from a protected workpiece in which a surface of a workpiece main body is protected with the protective seal, the protective seal detachment device comprising:
a rotatable rotating roller having a roll surface with adhesiveness; and
a rotation regulating unit configured to regulate rotation of the rotating roller, wherein
an adhesive tape piece having an adhesive surface is pressed by the rotating roller and rotated to hold the adhesive tape piece on the roll surface of the rotating roller with the adhesive surface facing outward, and then, rotation of the rotating roller is regulated by the rotation regulating unit, and
subsequently, the rotating roller holding the adhesive tape piece is pressed against one end of the protective seal on the protected workpiece to adhere to the adhesive surface of the adhesive tape piece, the regulation of the rotating roller by the rotation regulating unit is canceled, the rotating roller is rotated to cause the adhesive tape piece to adhere to the protective seal, and then, the rotating roller is rotated in an opposite direction toward the other end of the protective seal to peel the protective seal from the surface of the workpiece main body.

5. The protective seal detachment device according to claim 4, further comprising a clamp member to be pressed against the roll surface of the rotating roller.

6. The protective seal detachment device according to claim 4 or 5, further comprising:
a forward-backward movement means configured to move the rotating roller in forward and backward directions; and
an upward-downward movement means configured to move the rotating roller in upward and downward directions.
